# EUROPEAN PATENT APPLICATION

(11) **EP 4 191 180 A1**
(43) Date of publication of application: **07.06.2023**
(21) Application number: 21864138.9
(22) Date of filing: 20.08.2021
(51) Int. Cl.: F26B 5/04, A61F 13/53, B09B 3/00, F26B 3/347, F26B 5/14, F26B 21/10

(54) **DRYING METHOD**

(30) Priority: 03.09.2020 JP 2020147922
(71) Applicant: FUJI SHOJI CO., LTD., Gifu, 501-6257 (JP)
(72) Inventor: TANAKA Tatsumi, Hashima-shi, Gifu 501-6257 (JP)
(74) Representative: Kramer Barske Schmidtchen Patentanwälte PartG mbB
(86) International application number: PCT/JP2021/030557
(87) International publication number: WO 2022/050080

(57) **Abstract**

A drying method includes an initial decompressing and temperature-lowering step (S2) of decompressing the chamber (11) and lowering an air temperature inside the chamber (11) by operating a decompression pump (12a); and a drying cycle step (S3) that is repeatedly performed a plurality of times to dry an object (W) to be dried after performing the initial decompressing and temperature-lowering step (S2). The drying cycle step (S3) includes a microwave heating step (S32) of heating the object in the chamber (11) by microwave irradiation in the chamber (11) and a decompressing and temperature-lowering step (S33) of decompressing the chamber (11) and lowering the air temperature inside the chamber (11) again after performing the microwave heating step (S32) by operating the decompression pump (12a) with the microwave irradiation being stopped.

## Description

### TECHNICAL FIELD

The present disclosure relates to a drying method.

### BACKGROUND ART

As a method for drying an object to be dried, freeze-drying (freeze dry) has been known. Freeze-drying has been used for foods and the like among others. However, there is a problem that freeze-drying requires long time to dry up the object.

To solve the above problem, Patent Documents 1 and 2 propose drying methods that differ from freeze-drying. Patent Document 1 describes that an object to be dried is dried by periodically turning on and off microwave irradiation so as to repeatedly perform heating and cooling while maintaining the decompressed state under 6.7 to 20.0 kPa inside the chamber.

Patent Document 2 has a description that an object to be dried is dried by performing a first step for decompressing a stirring tank which contains the object in a frozen state while cooling it, a second step for drying the object under the reduced air pressure by stirring and heating it in the stirring tank, and a third step for freezing the object by feeding liquid nitrogen into the stirring tank while stirring it.

### PRIOR ART LITERATURE

### Patent Documents

Patent Document 1 Japanese Patent No. 4474506
Patent Document 2 JP-A-2020-085346

### SUMMARY OF THE INVENTION

### PROBLEMS TO BE SOLVED BY THE INVENTION

The present disclosure aims to provide a drying method that differs from the above-mentioned drying methods and makes it possible to dry an object to be dried in shorter time.

### MEANS FOR SOLVING THE PROBLEM

One aspect of the present disclosure is a drying method for drying an object (W) to be dried which is placed in a chamber (11), the method comprising:
an initial decompressing and temperature-lowering step (S2) of decompressing the chamber and lowering an air temperature inside the chamber by operating a decompression pump (12a); and
a drying cycle step (S3) that is repeatedly performed a plurality of times to dry the object, the drying cycle step including:
   a microwave heating step (S32) of heating the object in the chamber by microwave irradiation in the chamber; and
   a decompressing and temperature-lowering step (S33) of decompressing the chamber and lowering the air temperature inside the chamber again after performing the microwave heating step by operating the decompression pump with the microwave irradiation being stopped.

### EFFECTS OF THE INVENTION

As in the case of freeze-drying (freeze dry), in the case where only the decompressing and temperature-lowering is performed to dry the object to be dried, it takes longer time to dry up the object. By contrast, as in the drying method according to the above-mentioned aspect, by adding a heating process to heat the object further to the decompressing and temperature-lowering process in the drying cycle step, the time (drying time) required to dry up the object can be shortened. In particular, in the drying method, the drying cycle step is repeatedly performed a plurality of times. More in detail, the drying time can be further shortened by performing the decompressing and temperature-lowering process inside the chamber, performing the heating of the object to be dried then, performing the decompressing and temperature-lowering inside the chamber again, and further repeatedly performing the heating and the decompressing and temperature-lowering.

As for this aspect, the present inventor has found that when an initial state in the decompressing and temperature-lowering process is set such that the object to be dried has a high temperature, the drying efficiency is higher in comparison with the case where the initial state is set such that the object has a low temperature. And, according to the drying method of the above-mentioned aspect, the heating and the decompressing and temperature-lowering are repeatedly performed, and therefore the heating process is to be performed before the decompressing and temperature-lowering process. Having such a configuration, the decompressing and temperature-lowering process in which the object has a high temperature as the initial state can be repeatedly performed. Thus, the drying efficiency can be raised, so that the drying time can be shortened.

The heating is performed by microwave irradiation. Microwave irradiation makes it possible to efficiently heat the moisture contained in the object to be dried. Thus, the above-mentioned drying efficiency can be enhanced.

It is noted that the reference numerals described in CLAIMS and MEANS FOR SOLVING THE PROBLEMS explain correspondence with specific means described in after-mentioned embodiments, and do not limit the technical scope of the present invention.

### BRIEF DESCRIPTION OF THE DRAWINGS

FIG. 1 is a view illustrating a configuration of a drying apparatus.
FIG. 2 is a flow chart illustrating a drying method (control techniques) using the drying apparatus.
FIG. 3 is a timing chart illustrating the drying method.
FIG. 4 is a state diagram (phase diagram) of water showing a state change trajectory in a case of applying the drying method illustrated in FIG. 3.
FIG. 5 is an illustration of a plurality of experimental examples.
FIG. 6 is a graph showing reduction in moisture content in relation to time lapse for the plurality of experimental examples illustrated in FIG. 5.
FIG. 7 is a state diagram (phase diagram) of water showing a state change trajectory in a case of applying the drying method (freeze drying) C illustrated in FIG. 6.

### MODES FOR CARRYING OUT THE INVENTION

### 1. Object W to be dried

An object W to be dried is an object containing moisture and comprises all of the objects to be dried. Examples of the object W includes food, plants, used disposable diapers, and so on. In particular, for the object W, anything to be discarded after dried such as the used disposable diapers is suitable. Examples of the suitable object W include anything which can accept composition change, for example, caused by boiling of water just for the purpose of removing water content.

A configuration of a used disposable diaper as one example of suitable objects W will be briefly described here. A disposable diaper has a known configuration, which includes a surface layer (moisture-permeable non-woven fabric), a moisture-absorbent layer (water-absorbent polymer or the like), and a waterproof layer (non-water-permeable cover sheet), etc.

The surface layer is formed of, for example, a non-woven fabric made of polypropylene. Gathers are formed on the edge of the surface layer to prevent stool leakage and the like. The water-absorbent layer is formed of water-absorbent paper, cotton-like pulp, and a polymer absorbent (water-absorbent polymer). The polymer absorbent becomes a gel when it contains moisture, and even when pressure is applied, the moisture does not exude. Therefore, the urine is prevented from returning. The waterproof layer is formed of, for example, a polypropylene film. The edge of the waterproof layer has a gather or a tape provided thereon to thereby prevent urine leakage and the like.

A used disposable diaper is a disposable diaper in a state of containing moisture such as urine in the polymer absorbent (water-absorbent polymer) among the constituent materials of the disposable diaper. The polymer absorbent (water-absorbing polymer) becomes a gel when containing moisture, specifically urine, etc. as described above, and the moisture contained in the absorbent tends not to evaporate and exhibits flame retardancy, and thus, high combustion energy is required for incineration of the used disposable diaper. Therefore, in order to dispose of the used disposable diaper, it is effective to remove moisture contained in the polymer absorbent.

### 2. Configuration of drying apparatus 1

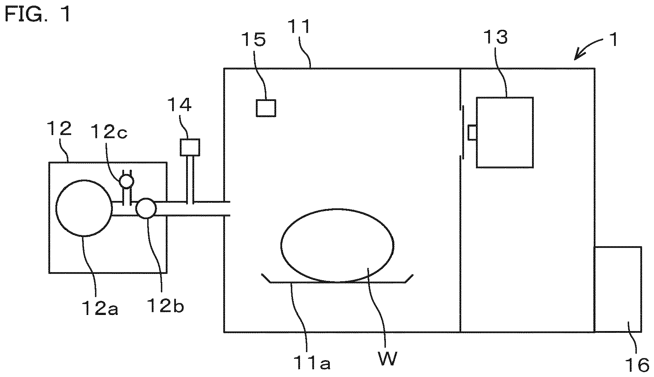

The configuration of drying apparatus 1 will be described with reference to FIG. 1. The drying apparatus 1 include a chamber 11 which can accommodate an object W to be dried. The pressure and temperature inside the chamber 11 can be controlled. The chamber 11 is equipped with a placement table 11a.

The drying apparatus 1 includes a decompressor 12 for controlling gas pressure in the chamber 11. The decompressor 12 includes a decompression pump 12a, a main valve 12b, and a leak valve 12c. The decompression pump 12a sucks in a gas in the chamber 11 and discharges the gas to the outside. Specifically, the chamber 11 can be decompressed by operation of the decompression pump 12a. The main valve 12b is disposed in a channel between the chamber 11 and the decompression pump 12a to control the amount of fluid flow. The leak valve 12c is a valve for supplying atmospheric air to the channel between the decompression pump 12a and main valve 12b, by which the amount of atmospheric air flow to be supplied can be controlled.

Specifically, the decompressor 12 can reduce and increase an air pressure in the chamber 11 by controlling the decompression pump 12a and the leak valve 12c. More specifically, when the decompression pump 12a operates and the leak valve 12c is closed, the inside of the chamber 11 can be decompressed. On the other hand, when the operation of the decompression pump 12a is stopped and the leak valve 12c is opened, the air pressure inside the chamber 11 can be increased. Further, the decompressor 12 can control the decompression speed and the pressure-increasing speed in the chamber 11 by adjusting the main valve 12b.

The drying apparatus 1 further includes a magnetron 13 for irradiating microwave in the chamber 11. In particular, the magnetron 13 can heat the object W placed in the chamber 11 by irradiating microwave in the chamber 11.

The drying apparatus 1 further includes a pressure sensor 14 for detecting an air pressure inside the chamber 11 and a temperature sensor 15 for detecting a temperature of the object W in the chamber 11. In this regard, the temperature sensor 15 may indirectly detect the temperature of the object W by detecting the atmospheric temperature inside the chamber 11, and may directly detect the temperature of the surface of the object W or the temperature of the inside thereof. The drying apparatus 1 further includes a control unit 16 for controlling the decompressor 12 and the magnetron 13.

### 3. Brief description of drying method (control techniques)

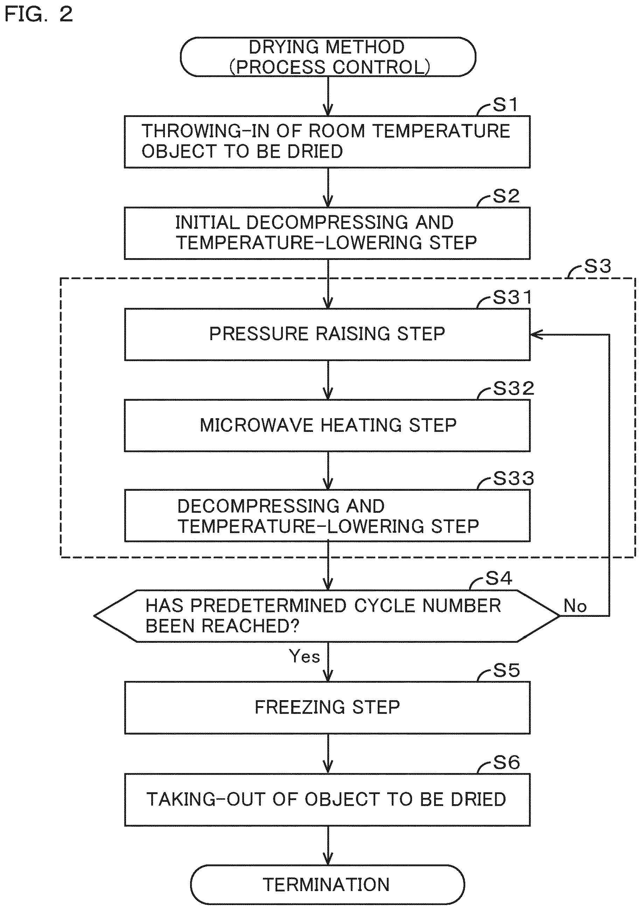

The method for drying the object W using the drying apparatus 1 will be described with reference to FIG. 2. The drying method described herein corresponds to the method for controlling the control unit 16 in the drying apparatus 1.

As shown in FIG. 2, an operator or a work robot (not illustrated) throws in the object W into the chamber 11 (an object throw-in step S1). The control unit 16, for example, opens a door provided on the chamber 11 and closes the door after the object W has been thrown in. The object W referred to here has a normal temperature (room temperature). For example, the temperature falls within the range of 15°C to 30°C. Thus, the object W has not been frozen.

The control unit 16 subsequently starts operation of the decompression pump 12a. At this time, the control unit 16 sets an opening degree of the main valve 12b to 100% and sets an opening degree of the leak valve 12c to 0%. As a result, the inside of the chamber 11 is decompressed and the air temperature of the chamber is lowered (an initial decompressing and temperature-lowering step S2). For example, in the initial decompressing and temperature-lowering step S2, a target is set near the triple point of water (a state in which three states of ice, water, and water vapor coexist in equilibrium). The triple point of water is about 610Pa and about 0.01 □.

In the initial decompressing and temperature-lowering step S2, it is preferable to set the target pressure to be larger than the triple point of the water and to set the target temperature to be higher than the triple point of water. In this case, the initial decompressing and temperature-lowering step S2 is performed within an air pressure range larger than the triple point of water and at an air temperature range higher than the triple point of water.

For example, in the initial decompressing and temperature-lowering step S2, the air pressure inside the chamber 11 is reduced from the atmospheric pressure (101300Pa: 1 atm), which is an initial state, to the range of 600 Pa to 800 Pa. As the chamber 11 is decompressed to the triple point of water (about 610 Pa), the air temperature inside the chamber 11 approaches the temperature of the triple point of water (about 0.01 □). If the inside of the chamber 11 is further decompressed from the pressure at the triple point of water (about 610 Pa), the air temperature inside the chamber 11 becomes lower than the temperature of the triple point of water (about 0.01 □). In this embodiment, for example, the inside of the chamber 11 is decompressed to the range of 600 Pa to 800 Pa in the initial decompressing and temperature-lowering step S2 to thereby lower the air temperature inside the chamber 11.

Further, in the initial decompressing and temperature-lowering step S2, the control unit 16 may control the opening degree of the main valve 12b using a pressure detected by the pressure sensor 14 so that the air pressure inside the chamber 11 falls within the target pressure (600 Pa to 800 Pa). For example, in the case where the air pressure inside the chamber 11 comes close to the target pressure, the opening degree of the main valve 12b is lessened to thereby reduce the decompressing speed. Then, the control unit 16 stops the operation of the decompression pump 12a at the time when the pressure inside the chamber 11 reaches the target pressure.

It is noted that when the target pressure is set to a range larger than the triple point of water and the target temperature is set to a range higher than the triple point of water in the initial decompressing and temperature-lowering step S2, the control unit 16 controls the air pressure inside the chamber 11 to be the target pressure (610 Pa to 800 Pa).

The control unit 16 subsequently performs the drying cycle step S3, which is repeatedly performed a plurality of times to dry the object W, after performing the initial decompressing and temperature-lowering step S2. In a single drying cycle step S3, the pressure raising step S31, the microwave heating step S32, and the decompressing and temperature-lowering step S33 are performed in turn. Therefore, when the drying cycle steps S3 is performed a plurality of times, the pressure raising step S31, the microwave heating step S32, and the decompressing and temperature-lowering step S33 are repeatedly performed a plurality of times.

In the pressure raising step S31, the pressure inside the chamber 11, the inside of which has been decompressed and the air temperature inside which has been lowered, is raised by stopping the operation of the decompression pump 12a. At this time, the control unit 16 stops the operation of the decompression pump 12a and opens the leak valve 12c. As a result, atmospheric air flows into the chamber 11 to thereby raise the air pressure inside the chamber 11.

In this regard, in the pressure raising step S31, the air pressure inside the chamber 11 is not raised to the atmospheric pressure, but is raised to an air pressure, for example, within the range larger than the triple point of water (about 610 Pa) and not more than 10 kPa. It is particularly preferable in the pressure raising step S31 that the range is set to 5 kPa or less. For this purpose, the opening degree of the main valve 12b is preferably set, for example, within the range of 30% to 80% rather than 100%.

In the microwave heating step S32, the inside of the chamber 11 is irradiated with microwaves by operating the magnetron 13 after the pressure raising step S 31 is performed. The object W inside the chamber 11 is heated by microwave irradiation. In particular, in the microwave heating step S32, the temperature of the object W is raised to a temperature higher than the triple point of water. When the temperature of the object W has already been higher than the triple point of water, the object W is made to have much higher temperature.

When the air pressure inside the chamber 11 is raised in the pressure raising step S31 so that water content of the object W becomes liquid phase (water), the heating process by microwaves is efficiently performed. And, when the pressure inside the chamber 11 is close to the atmosphere pressure rather than the vacuum state, the microwaves are easily propagated. In other words, by raising the pressure inside the chamber 11 in the pressure raising step S31, the microwaves are easily propagated through the air inside the chamber 11 towards the object W. Thus, the object W can be efficiently irradiated with the microwaves and consequently can be efficiently heated.

In the microwave heating step S32, the inside of the chamber 11 may be irradiated with microwaves while being decompressed by operating the decompression pump 12a, and may be irradiated with microwaves with the operation of the decompression pump 12a being stopped.

When the decompression pump 12a is operated in the microwave heating step S32, the opening degree of the main valve 12b may be set to 100%, or may be set to other than 100%. In order to efficiently heat the object W by microwaves, the opening degree of the main valve 12b is preferably set in the range of 30% to 80%. In this way, the opening degree of the main valve 12b in the microwave heating step S32 is set smaller than that in the initial decompressing and temperature-lowering step.

When the object W is heated by microwave irradiation, generation of water vapor may be caused inside the chamber 11 in some cases. In this case, the water vapor to be generated can be reduced by keeping the operation of the decompression pump 12a. By reducing the water vapor inside the chamber 11, the object W can be efficiently heated by microwaves.

In the case where the operation of the decompression pump 12a is stopped in the microwave heating step S32, the chamber 11 is filled with water vapor in some cases. In this condition, effects by heating the object W with the microwaves may be decreased. For such occasions, it is desirable to keep the operation of the decompression pump 12a. However, even if the operation of the decompression pump 12a is stopped, the object W can be heated.

In the case where the object W to be dried is a used disposable diaper, it is preferable in the microwave heating step S32 to heat the object W to a temperature the upper limit of which is set to the air temperature inside the chamber 11 at a time of starting the initial decompressing and temperature-lowering step S2. If the temperature of the object W thus heated is higher than the normal temperature (room temperature), there is a risk that odor may be problematically caused. For such occasions, by heating the object W to the temperature the upper limit of which is set to the normal temperature (room temperature), such problematic odor can be curtailed.

In the decompressing and temperature-lowering step S33 to be performed after the microwave heating step S32, the magnetron 13 is stopped to stop the microwave irradiation, and the decompression pump 12a is operated to thereby decompress the inside of the chamber 11 and lower the air temperature of the chamber 11. In the decompressing and temperature-lowering step S33, substantially the same process as in the initial decompressing and temperature-lowering step S2 is performed. In this regard, it is noted that the inside of the chamber 11 and the object W in the decompressing and temperature-lowering step S33 are in the states caused by the microwave heating step S32, which differ from those in the initial decompressing and temperature-lowering step S2.

Termination of the decompressing and temperature-lowering step S33 is determined to be completion of a single drying cycle step S3. Whether the number of cycle times of the drying cycle step S3 has reached a predetermined number of cycle times is determined (S4). And if not (S4: No), the processes of the pressure raising step S31 through the decompressing and temperature-lowering step S33 are repeatedly performed again. In this way, by repeating the decompressing and temperature-lowering step S33 a plurality of times, most of the moisture contained in the object W is reduced to thereby dry up the object W.

The control unit 16 subsequently performs a freezing step S5 after the drying cycle step S3 is repeated in the predetermined number of cycle times (S4: Yes). In the freezing step S5, the object W to be dried is frozen by decompressing the inside of the chamber 11 to the triple point of water or less by operating the decompression pump 12a. In this regard, at the time of starting the freezing step S5, most of the moisture contained in the object W has already been reduced. Therefore, the time required for freezing the object W in the freezing step S5 is not so long.

When the freezing step S5 has been terminated, an operator or a work robot takes out the object W thus frozen from the chamber 11 (an object taking-out step S6). The control unit 16, for example, opens a door provided on the chamber 11 and closes the door after the object W has been taken out. Because the object W is frozen, even in the case where the object W is a used disposable diaper, the object W can be taken out from the chamber 11 without leaking of odor.

A decompressing level in the freezing step S5 falls within the range of 100 Pa to 200 Pa. Because the freezing step S5 does not aim at drying but aims at freezing only, the air pressure is higher than the decompressing level used in so-called freeze-drying (freeze dry). Therefore, when applying the freezing step S5, performance (specifications) of the decompression pump 12a can be set lower in comparison with the case of applying freeze-drying (freeze dry).

In this regard, in the above-mentioned drying method, the object W may be taken out from the chamber 11 without performing the freezing step S5. In this case, the object W has been dried, however, it has not been frozen. In the state where the object W is not frozen, odor may be generated from odor components contained in the moisture slightly left in the object W in some cases. However, the freezing step S5 can be skipped if the purpose is just to dry the object W.

### 4. Embodiment of drying method

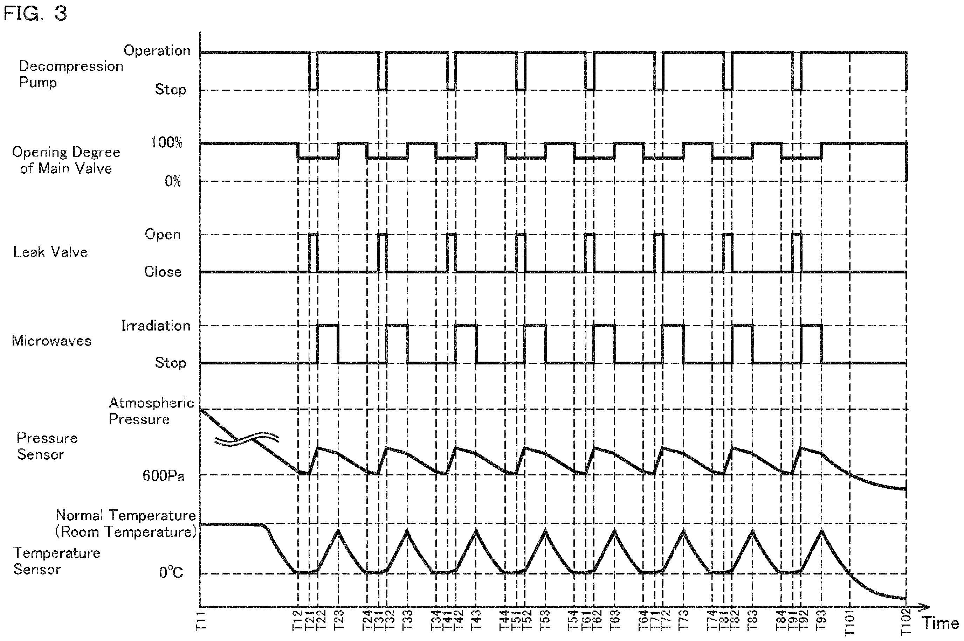

An embodiment of the drying method will be described with reference to FIG. 3. In FIG. 3, T11 through T101 respectively indicate time points. At T11, the object W to be dried is thrown in the chamber 11 (S1 in FIG. 2). At T11, the inside of the chamber 11 is under the atmospheric pressure condition and at a normal temperature (room temperature, for example, 20□). And the operation of the decompression pump 12a is started (S2 in FIG. 2). At this time, the opening degree of the main valve 12b is 100%, the leak valve 12c is closed, and microwaves have not been applied. Therefore, the air temperature and air pressure inside the chamber 11 are lowered. At this time, it is considered that in the water content of the object W at this time, water (liquid phase) and water vapor (gas phase) coexist.

Then, at T12, an air pressure (for example, 800 Pa) slightly higher than the target pressure (for example, 600 Pa) is reached. The opening degree of the main valve 12b is consequently decreased to 65%. Thus, the decompressing speed of the chamber 11 is reduced.

When the air pressure inside the chamber 11 reaches a target pressure (for example, 600Pa) at T21, the initial decompressing and temperature-lowering step (S2) is terminated and the pressure raising step (S31 in FIG. 2) in the drying cycle step (S3 in FIG. 2) is performed. Specifically, the operation of the decompression pump 12a is stopped and the leak valve 12c is opened. At this time, the opening degree of the main valve 12b maintains 65%. And, microwaves have not been applied. By the pressure raising step (S31), water content of the object W becomes water (liquid phase).

A time period from T21 to T22 is, for example, set to one minute. At T22, the microwave heating step (S32 in FIG. 2) in the drying cycle step (S3) is performed. Specifically, the microwaves are applied. At this time, in this embodiment, operation of the decompression pump 12a is started, and the leak valve 12c is closed. The opening degree of the main valve 12b maintains 65%. Thus, the water content contained in the object W is in the state of water (liquid phase), the temperature of which increases.

A time period from T22 to T23, for example, is set to two minutes. At T23, the decompressing and temperature-lowering step (S33 in FIG. 2) in the drying cycle step (S3) is performed. Specifically, microwave irradiation is stopped, and the inside of the chamber 11 is decompressed by the decompression pump 12a. At T23, an opening degree of the main valve 12b is set to 100%. As a result, the air pressure inside the chamber 11 is reduced and the air temperature of the chamber 11 is lowered. It is considered that in the water content contained in the object W at this time, water (liquid phase) and water vapor (gas phase) coexist.

Then, at T24, an air pressure slightly higher than the target pressure (for example, 600 Pa) is reached. At this point, the opening degree of the main valve 12b is consequently decreased to 65%. Thus, the decompressing speed of the chamber 11 is reduced.

When the air pressure inside the chamber 11 reaches a target pressure (for example, 600Pa) at T31, the first drying cycle step (S3) is terminated, and the second drying cycle step (S3) is started. Specifically, the operation of the decompression pump 12a is stopped and the leak valve 12c is opened. At this time, the opening degree of the main valve 12b continues to be 65%. And, no microwave is irradiated. By the pressure raising step (S31), the water content contained in the object W becomes water (liquid phase).

The second drying cycle step (S3) is performed at T31 through T41, the third drying cycle step (S3) is performed at T41 through T51, the fourth drying cycle step (S3) is performed at T51 through T61, the fifth drying cycle step (S3) is performed at T61 through T71, the sixth drying cycle step (S3) is performed at T71 through T81, the seventh drying cycle step (S3) is performed at T81 through T91, and the eighth drying cycle step (S3) is performed at T91 through T101. In this regard, in the decompressing and temperature-lowering step S33 (T93 through T101) in the eighth and final drying cycle step (S3), the opening degree of the main valve 12b is maintained to be 100%.

When the decompressing and temperature-lowering step (S33) in the drying cycle step (S3) is terminated at T101, the freezing step (S5 in FIG. 2) is subsequently started. In the freezing step (S5), the control unit 16 operates to maintain the same state as in the final decompressing and temperature-lowering step (S33). Specifically, microwave irradiation is stopped, and the inside of the chamber 11 is decompressed by the decompression pump 12a. And, an opening degree of the main valve 12b is set to 100%.

When the air pressure inside the chamber 11 finally reaches a target pressure (for example, 100Pa to 200Pa) at T102, the freezing step (S5) is terminated. And, the object W thus dried and frozen is taken out from the chamber 11 (S6 in FIG. 2).

### 5. State change trajectory in state diagram of water

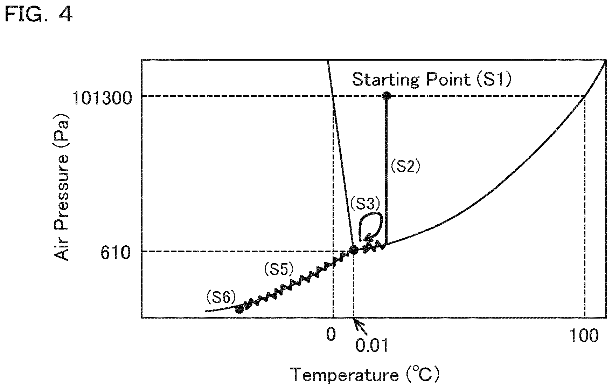

Regarding the above-mentioned drying method, the state change of water content in the object W will be described using the state diagram of water in FIG. 4. At a starting point corresponding to the drying object throw-in step (S1 in FIG. 2), the air pressure is 1 atm and the air temperature is a normal temperature (room temperature, for example, 20°C). In the initial decompressing and temperature-lowering step (S2 in FIG. 2), the inside of the chamber 11 is decompressed, so that the trajectory moves toward the triple point of water along the boundary of water (liquid phase) and water vapor (gas phase).

Thereafter, in the drying cycle step (S3 in FIG. 2), the trajectory moves back and forth between the vicinity of the triple point of water and the point of higher temperature than the triple point of water. In the embodiment shown in FIG. 3, the moving routes are different between a forward route and a backward route. In this regard, the forward route and the backward route may be the same to each other. Subsequently in the freezing step (S5 in FIG. 2), the trajectory moves from the triple point of water along the boundary between solid phase (ice) and gas phase (water vapor).

### 6. Comparative Experiment

Next, an experiment on drying time was conducted for the above-mentioned drying method and drying methods other than the above-mentioned drying method.

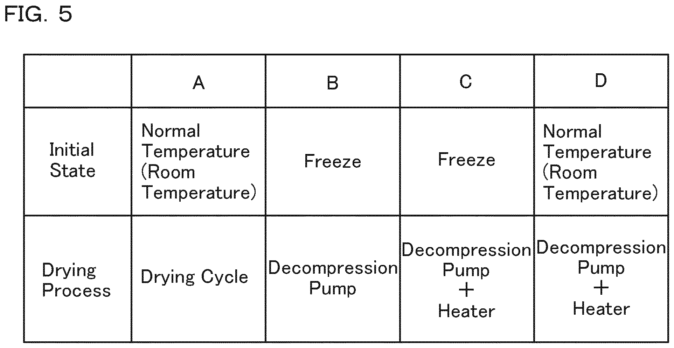

The drying methods (A, B, C, and D) subjected to the experiment are shown in FIG. 5. Here, an object W to be dried contains moisture in an amount of 300g in the initial state. And, at the time when the object W has its moisture content reduced to 30g, the status of the object W is defined as a dried state.

Experimental Example A is a drying method shown in FIG. 3 mentioned above. Specifically, in Experimental Example A, an object W to be dried has a normal temperature (room temperature, for example, 20 □) in the initial state at the time of being thrown in a chamber 11. In the drying process, a drying cycle (S3 in FIG. 2) is performed.

Experimental Example B is a method performed on an object W which is frozen in the initial state at the time of being thrown in a chamber 11. In the drying process, the decompression pump 12a is driven at any given time to decompress the inside of the chamber 11. Experimental Example B is so-called freeze-drying (freeze dry). Specifically, the inside of the chamber 11 is decompressed by the decompression pump 12a for example, to the extent that the air pressure inside the chamber 11 becomes lower than 50 Pa. Thus, the object W is dried up by sublimation.

Experimental Example C is a method performed on an object W to be dried which is frozen in the initial state at the time of being thrown in a chamber 11. In the drying process, the decompression pump 12a is driven at any given time to decompress the inside of the chamber 11, and at the same time, the placement table 11a is heated by a heater (not illustrated) at any given time to continuously heat the object W. Thus, the object W is dried up by sublimation. The heater functions to activate the sublimation.

Experimental Example D is a method performed on an object W to be dried which has a normal temperature (room temperature) in the initial state at the time of being thrown in the chamber 11. The drying process is performed in the same way as in Experimental Example C, that is, the decompression pump 12a is driven at any given time to decompress the inside of the chamber 11, and at the same time, the placement table 11a is heated by a heater at any given time to continuously heat the object W. In fact, in the object W, vaporization is caused in the temperature range higher than the triple point of water, thereafter sublimation is caused in the temperature range lower than the triple point of water.

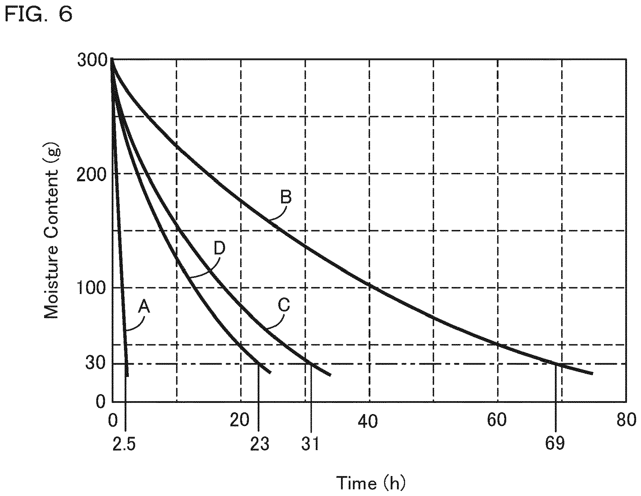

Experimental results are shown in FIG. 6. The time required for reducing the moisture content of the object W to 30g in each experimental example is as follows. Experimental Example A requires 2.5 hours. Experimental Example B requires 69 hours. Experimental Example C requires 31 hours. Experimental Example D requires 23 hours. In Experimental Example A, in which the above-mentioned drying cycle step S3 is performed, the drying process proceeds in extremely short time.

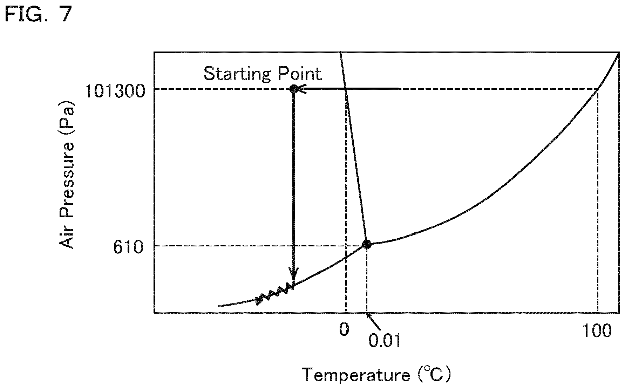

In Experimental Example C in FIG. 6, the state change of water content in the object W is represented by the solid line arrow in the state diagram of water in FIG. 7. At the starting point, the temperature is a temperature at which the object W is frozen (for example, -20□). The inside of the chamber 11 is decompressed thereafter, the trajectory moves toward the boundary between ice (solid phase) and water vapor (gas phase). And then, the trajectory moves along the boundary between ice (solid phase) and water vapor (gas phase), and the drying process terminates.

As shown in Experimental Example B, in the case where only the decompressing and temperature-lowering is performed to dry the object W for the purpose of freeze-drying (freeze dry), it takes longer time (drying time) to dry up the object to be dried. As shown in Experimental Example C, the drying time can be shortened by using a heater. As shown in Experimental Example D, the drying time can be shortened by setting the initial state of the object W to have normal temperature. As seen in Experimental Examples C and D, the drying time can be shortened by heating the object W additionally to the decompressing and temperature-lowering process.

FIG. 6 indicates that all of Experimental Examples B, C, and D attain the largest moisture reduction in an initial stage when the drying is started. In fact, it becomes clear that the higher the temperature of the object W in the decompressing and temperature-lowering process is, the higher the drying efficiency is. Furthermore, in a comparison between Experimental Example C in which the object W is frozen and Experimental Example D in which the object W has a normal temperature, it is clear that Experimental Example D exhibits higher drying efficiency.

Consequently, it is conceivable that the drying time can be shortened if the state of high drying efficiency can be repeated a number of times. To that end, as shown by Experimental Example A, after the decompressing and temperature-lowering process was performed, the heating process and subsequently a follow-up decompressing and temperature-lowering process were performed. Repetition of the heating and the decompressing and temperature-lowering makes it possible to repeat the decompressing and temperature-lowering process setting the initial state such that the object W has a high temperature. In this way, the drying efficiency can be raised, so that the drying time can be shortened.

In more detail, the heating process is performed by microwave irradiation. Microwave irradiation makes it possible to efficiently heat the moisture contained in the object to be dried. Thus, the above-mentioned drying efficiency can be enhanced.

## Claims

1. A drying method for drying an object (W) to be dried which is placed in a chamber (11), the method comprising:
an initial decompressing and temperature-lowering step (S2) of decompressing the chamber and lowering an air temperature inside the chamber by operating a decompression pump (12a); and
a drying cycle step (S3) that is repeatedly performed a plurality of times to dry the object, the drying cycle step including:
a microwave heating step (S32) of heating the object in the chamber by microwave irradiation in the chamber; and
a decompressing and temperature-lowering step (S33) of decompressing the chamber and lowering the air temperature inside the chamber again after performing the microwave heating step by operating the decompression pump with the microwave irradiation being stopped.

2. The drying method according to claim 1, wherein the drying cycle step (S3) comprising:
a pressure raising step (S31) in which the operation of the decompression pump is stopped to thereby raise an air pressure in the chamber which has been decompressed and an air temperature inside which has been lowered;
the microwave heating step (S32) to be performed after the pressure raising step; and
the decompressing and temperature-lowering step (S33) to be performed after the microwave heating step.

3. The drying method according to claim 2, wherein in the microwave heating step (S32), the object in the chamber is heated by microwave irradiation in the chamber while the chamber the air pressure in which has been raised in the pressure raising step is decompressed by operating the decompression pump.

4. The drying method according to claim 3, wherein in a channel between the decompression pump and the chamber in the microwave heating step (S32), a valve is disposed with an opening degree set smaller than those respectively set in the initial decompressing and temperature-lowering step (S2) and in the decompressing and temperature-lowering step (S33).

5. The drying method according to any one of claims 2 to 4, wherein in the pressure raising step (S31), the air pressure in the chamber is raised within a range larger than the triple point of water and not more than 10 kPa, and
in the microwave heating step (S32), the object is heated to a temperature higher than the triple point of water.

6. The drying method according to any one of claims 1 to 5, wherein the initial decompressing and temperature-lowering step and the decompressing and temperature-lowering step are performed within an air pressure range larger than the triple point of water and at an air temperature range higher than the triple point of water.

7. The drying method according to any one of claims 1 to 6, further comprising a freezing step (S5) after the drying cycle step, in which the chamber is decompressed to the triple point of water or less by operating the decompression pump to thereby freeze the object.

8. The drying method according to any one of claims 1 to 7, wherein the object comprises a used disposable diaper having a water-absorbent polymer in a state of containing moisture.

9. The drying method according to claim 8, wherein in the microwave heating step, heating is performed at an air temperature the upper limit of which is set to the air temperature in the chamber at a time of starting the initial decompressing and temperature-lowering step.
